# EUROPÄISCHE PATENTSCHRIFT

(11) **EP 2 746 158 B1**
(45) Veröffentlichungstag und Bekanntmachung des Hinweises auf die Patenterteilung: **24.04.2019**
(21) Anmeldenummer: 13199144.0
(22) Anmeldetag: 20.12.2013
(51) Int. Cl.: B64D 11/06, B64D 11/00

(54) **Flugzeugsitzhaltevorrichtung**
Aircraft seat holding device
Dispositif de support de siège d'avion

(30) Priorität: 21.12.2012 DE 102012112942; 21.12.2012 DE 102012112943
(43) Veröffentlichungstag der Anmeldung: 25.06.2014
(73) Patentinhaber: Recaro Aircraft Seating GmbH & Co. KG, 74523 Schwäbisch Hall (DE)
(72) Erfinder: Thiele, Maik, 74544 Michelbach an der Bilz (DE); Minzer, Heiko, 74523 Schwäbisch Hall (DE); Bich, Christoph, 73453 Abtsgmünd (DE); Jäger, Gunther, 74429 Sulzbach-Laufen (DE); Schürg, Christoph, 74523 Schwäbisch Hall (DE)
(74) Vertreter: Daub, Thomas

(56) Entgegenhaltungen:
- EP-A2- 2 602 149
- WO-A2-2007/109703
- US-A1- 2012 120 626
- US-A1- 2012 248 833

## Beschreibung

### Stand der Technik

Die Erfindung betrifft einen Flugzeugsitz mit einer Flugzeugsitzhaltevorrichtung nach dem Oberbegriff des Patentanspruchs 1.

Es ist bereits eine Flugzeugsitzhaltevorrichtung mit zumindest einer Rückenlehne, mit zumindest einer von einer Rückenlehnenbrücke gebildeten Flugzeugsitzträgereinheit und mit zumindest einer Befestigungseinheit, die dazu vorgesehen ist, in zumindest einem Betriebszustand zumindest ein PED an der Rückenlehne austauschbar und bedienbar zu befestigen, vorgeschlagen worden.

Die Druckschrift US 2012/120626 A1 offenbart bereits einen Fahrzeugsitz mit einer Rückenlehne sowie einer Befestigungseinheit für zumindest einen PED, die zumindest Teilweise von einer Trägereinheit ausgebildet ist.

Die Aufgabe der Erfindung besteht insbesondere darin, eine gattungsgemäße Flugzeugsitzhaltevorrichtung mit verbesserten Eigenschaften hinsichtlich Kosten und einer konstruktiven Einfachheit bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einem Flugzeugsitz mit einer Flugzeugsitzhaltevorrichtung mit zumindest einer Rückenlehne, mit zumindest einer von einer Rückenlehnenbrücke gebildeten Flugzeugsitzträgereinheit, die auf einer rechten Seite und einer linken Seite der Rückenlehne jeweils einen Anbindungsbereich aufweist, in dem die als Rückenlehnenbrücke ausgebildete Flugzeugsitzträgereinheit jeweils mit der Rückenlehne 10a verbunden ist, wobei die Flugzeugsitzträgereinheit zwischen den beiden Anbindungsbereichen einen Mittelbereich aufweist, mit zumindest einer Literaturtasche, die eine Öffnung aufweist, über die Literatur und andere Gegenstände in die Literaturtasche eingeführt werden können, und mit zumindest einer Befestigungseinheit, die dazu vorgesehen ist, in zumindest einem Betriebszustand zumindest ein PED an der Rückenlehne austauschbar und bedienbar zu befestigen, wobei die Befestigungseinheit zumindest teilweise in die als Rückenlehnenbrücke gebildete Flugzeugsitzträgereinheit integriert ist.

Es wird vorgeschlagen, dass ein Raum, der zwischen dem Mittelbereich der Flugzeugsitzträgereinheit und der Rückseite der Rückenlehne aufgespannt wird, die Öffnung der Literaturtasche bildet. Unter einer "Rückenlehne" soll dabei insbesondere ein Teil eines Flugzeugsitzes verstanden werden, welches einen Rücken eines auf dem Flugzeugsitz sitzenden Passagiers stützt. Die Rückenlehne ist dabei zumindest in einer TTL-Position im Wesentlichen senkrecht zu einer Aufständerebene, auf der der Flugzeugsitz aufgeständert ist, ausgerichtet und ist schwenkbar mit einem Sitzboden des Flugzeugsitzes verbunden. Unter einer "Fahrzeugsitzträgereinheit" soll insbesondere eine Einheit verstanden werden, die in dem montierten Zustand als eine Trägereinheit zumindest einer weiteren Komponente ausgebildet ist. Unter einer "Trägereinheit" soll insbesondere eine Einheit verstanden werden, die in dem montierten Zustand dazu vorgesehen ist, eine Gewichtskraft der weiteren Komponente zumindest teilweise zu tragen. Vorzugsweise ist die Trägereinheit dazu vorgesehen, in dem montierten Zustand auf die Trägereinheit einwirkende Kräfte abzuleiten. Unter einer "Rückenlehnenbrücke" soll insbesondere eine Einheit verstanden werden, die dazu vorgesehen ist, eine Rückenlehne zumindest teilweise zu überbrücken. Insbesondere ist die Rückenlehnenbrücke dazu vorgesehen, zumindest zwei, vorzugsweise seitliche Begrenzungen der Rückenlehne miteinander zu verbinden. Insbesondere ist die Rückenlehnenbrücke in einem oberen Bereich der Rückenlehne angeordnet. Unter einem "oberen Bereich" der Rückenlehne soll insbesondere ein Bereich der Rückenlehne verstanden werden, der in einer aufrechten Stellung des Flugzeugsitzes, vorzugsweise bei einer zumindest im Wesentlichen senkrecht zu dem Boden ausgerichteten Rückenlehnenlängserstreckung, in einem einer Aufständereinheit des Flugzeugsitzes abgewandten Bereich der Rückenlehne angeordnet ist. Insbesondere ist der obere Bereich der Rückenlehne bezüglich einer Rückenlehnenlängsrichtung oberhalb eines Betrags von mehr als 40 %, vorzugsweise von mehr als 50 % und insbesondere von mehr als 55 % der Rückenlehnenlängserstreckung angeordnet. Unter einer "Rückenlehnenlängserstreckung" soll dabei insbesondere eine Haupterstreckung der Rückenlehne verstanden werden, die in einer aufrechten Stellung der Rückenlehne, also der TTL-Position, im Wesentlichen senkrecht zu der Aufständerebene verläuft. Die Rückenlehnenlängserstreckung erstreckt sich dabei von einem ersten unteren Ende der Rückenlehne, an dem die Rückenlehne mit einem Sitzboden gekoppelt ist, bis an ein zweites oberes Ende, an dem die Rückenlehne eine Kopfstütze aufweist. Unter einer "Befestigungseinheit" soll dabei insbesondere eine Einheit verstanden werden, die dazu vorgesehen ist, in zumindest einem Betriebszustand ein PED kraftschlüssig und/oder formschlüssig an der Rückenlehne zu befestigen. Beispielsweise ist die Befestigungseinheit dazu vorgesehen, in zumindest einem Betriebszustand das PED mittels einer Rastverbindung, einer Klemmverbindung und/oder einer Verbindung mittels eines Klettverschlusses zu befestigen. Alternativ sind weitere, einem Fachmann als sinnvoll erscheinende Befestigungsarten denkbar. Insbesondere ist die Befestigungseinheit dazu vorgesehen, in zumindest einem Betriebszustand das PED unter Vermeidung einer Bewegung des PEDs bei Einwirken von durch eine Bedienung des PEDs erzeugten Kräften zu befestigen. Unter "bedienbar befestigen" soll dabei insbesondere verstanden werden, dass der PED in einer solchen Weise an der Befestigungseinheit angebracht ist, dass er von einem auf dem entsprechenden Flugzeugsitz sitzenden Passagier bedient werden kann. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Unter "zumindest teilweise integriert" soll dabei insbesondere verstanden werden, dass zumindest ein Teil der Befestigungseinheit, vorteilhaft aber mehr als 50 % der Befestigungseinheit und in einer besonders vorteilhaften Ausgestaltung die komplette Befestigungseinheit in die als Rückenlehnenbrücke ausgebildete Flugzeugsitzträgereinheit integriert ist. Unter einem "PED" soll dabei insbesondere ein mobiles elektronisches Gerät, wie insbesondere ein Tablet-PC, ein Smartphone, ein E-Book-Reader oder ein anderes, dem Fachmann als sinnvoll erscheinendes mobiles elektronisches Gerät verstanden werden. Durch eine erfindungsgemäße Ausgestaltung kann die Befestigungseinheit besonders einfach und vorteilhaft in die Rückenlehne integriert werden. Dadurch kann insbesondere eine einfache Flugzeugsitzhaltevorrichtung bereitgestellt werden.

Weiter wird vorgeschlagen, dass die Befestigungseinheit wenigstens ein bewegbares Halteelement aufweist, das an die Flugzeugsitzträgereinheit angebunden ist. Unter einem "Halteelement" soll dabei insbesondere ein Element verstanden werden, an dem sich andere Elemente, wie insbesondere ein PED, abstützen können und dadurch gehalten werden. Dabei wird eine Gewichtskraft von dem gehaltenen Element über das Halteelement an die Struktur, an der das Halteelement befestigt ist, wie in diesem Fall insbesondere die als Rückenlehnenbrücke ausgebildete Flugzeugsitzträgereinheit, eingeleitet. Darunter, dass das "Halteelement" beweglich ist", soll dabei insbesondere verstanden werden, dass das Halteelement zumindest zwei Zustände aufweist, in denen es in verschiedenen Stellungen ausgerichtet ist. Dabei ist das Halteelement durch eine Lagerung, wie beispielsweise ein Scharnier, eine Linearführung oder eine andere, dem Fachmann als sinnvoll erscheinende Lagerung in definierten Bewegungsbahnen zu der Flugzeugsitzträgereinheit bewegbar. Dadurch kann die Befestigungseinheit besonders vorteilhaft und einfach benutzbar ausgebildet werden.

Zudem wird vorgeschlagen, dass das bewegbare Halteelement als eine schwenkbare Klappe ausgebildet ist. Unter einer "schwenkbaren Klappe" soll dabei insbesondere ein Element verstanden werden, das um eine Rotationsachse zu einer Struktur, an der es befestigt ist, wie in diesem Fall insbesondere zu der als Rückenlehnenbrücke ausgebildeten Flugzeugsitzträgereinheit, schwenkbar gelagert ist. Dadurch kann das Halteelement besonders einfach und vorteilhaft ausgebildet werden.

Des Weiteren wird vorgeschlagen, dass das bewegbare Halteelement zumindest ein Abstützelement aufweist, das dazu vorgesehen ist, ein unteres Ende des PEDs abstützen. Unter einem "Abstützelement" soll dabei insbesondere ein Element verstanden werden, das eine Auflagefläche für ein auf dem Halteelement anzubringendes Element, wie insbesondere ein PED, bereitstellt, wodurch das Element vorteilhaft sicher auf dem Halteelement aufliegen kann. Unter einem "unteren Ende des PEDs" soll dabei insbesondere ein nach unten, in Richtung einer Aufständerebene, auf der der Flugzeugsitz aufgeständert ist, gerichtetes Ende des PEDs verstanden werden. Dabei ist die Bezeichnung unteres Ende jeweils nicht auf ein spezielles Ende des PEDs bezogen, sondern bezieht sich auf ein Ende des PEDs in Bezug auf den Flugzeugsitz. Dadurch kann das Halteelement besonders vorteilhaft zur sicheren Abstützung eines PEDs ausgebildet werden.

Weiterhin wird vorgeschlagen, dass das bewegbare Halteelement eine Außenkontur ausbildet, die in einem eingeklappten Zustand eben mit einer Außenkontur der Flugzeugsitzträgereinheit verläuft. Unter einer "Außenkontur des Halteelements" soll dabei insbesondere eine Kontur des Halteelements verstanden werden, die das Halteelement nach außen hin, insbesondere in eine von der Rückenlehne abgewandte Richtung, begrenzt. Die Außenkontur bildet dabei vorzugsweise eine Oberfläche, die das Halteelement in Richtung eines hinter der Rückenlehne angeordneten Flugzeugsitzes abschließt und die, von einem auf dem Flugzeugsitz sitzenden Passagier gesehen, erfasst werden kann. Unter einer "Außenkontur der Flugzeugsitzträgereinheit" soll dabei insbesondere eine Kontur der Flugzeugsitzträgereinheit verstanden werden, die die Flugzeugsitzträgereinheit nach außen hin, insbesondere in eine von der Rückenlehne abgewandte Richtung begrenzt. Die Außenkontur bildet dabei vorzugsweise eine Oberfläche, die die Flugzeugsitzträgereinheit in Richtung eines hinter der Rückenlehne angeordneten Flugzeugsitzes abschließt und die, von einem auf dem Flugzeugsitz sitzenden Passagier gesehen, erfasst werden kann. Darunter, dass die "Außenkonturen eben verlaufen", soll dabei insbesondere verstanden werden, dass die Außenkontur der Flugzeugsitzträgereinheit und die Außenkontur des Halteelements in einem Übergang zwischen der Flugzeugsitzträgereinheit und dem Halteelement in einer Ebene verlaufen und in dem Übergang zwischen der Flugzeugsitzträgereinheit und dem Halteelement insbesondere kein Absatz vorhanden ist. Unter einem "eingeklappten Zustand des Halteelements" soll dabei insbesondere eine Stellung des Halteelements verstanden werden, in der kein Element von ihm gehalten wird und das Halteelement möglichst platzsparend an und/oder in der Flugzeugsitzträgereinheit angeordnet ist. Der eingeklappte Zustand des Halteelements bildet eine Verstaustellung der Befestigungseinheit aus. Dadurch kann das Halteelement besonders vorteilhaft in die Flugzeugsitzträgereinheit integriert werden und insbesondere störende Kanten und Absätze in einer Außenkontur der Rückenlehne können vermieden werden. Ferner wird vorgeschlagen, dass die Flugzeugsitzträgereinheit eine Tasche ausbildet, in der das bewegliche Halteelement in einem eingeklappten Zustand angeordnet ist. Dadurch kann das Halteelement vorteilhaft platzsparend in der Flugzeugsitzträgereinheit angeordnet werden.

Es wird weiter vorgeschlagen, dass sich das Halteelement lediglich über einen Teil der als Rückenlehnenbrücke ausgebildeten Flugzeugsitzträgereinheit erstreckt. Darunter, dass sich das "Halteelement lediglich über einen Teil der als Rückenlehnenbrücke ausgebildeten Flugzeugsitzträgereinheit erstreckt", soll dabei insbesondere verstanden werden, dass sich das Halteelement insbesondere in einer Querrichtung nur zu einem Teil der als Rückenlehnenbrücke ausgebildeten Flugzeugsitzträgereinheit erstreckt. Dadurch kann das Halteelement besonders vorteilhaft platzsparend ausgebildet werden.

Weiter wird vorgeschlagen, dass der Flugzeugsitz zumindest eine Aufnahmeeinheit zur Befestigung eines oberen Endes des PEDs aufweist. Unter einer "Aufnahmeeinheit" soll dabei insbesondere eine Einheit verstanden werden, die zumindest ein Kraft- und/oder Formschlusselement umfasst, mittels dessen das PED an der Rückenlehne befestigt werden kann. Unter einem "oberen Ende des PEDs" soll dabei insbesondere ein nach oben, von der Aufständerebene, auf der der Flugzeugsitz aufgeständert ist, abgewandtes Ende des PEDs verstanden werden. Dabei ist die Bezeichnung oberes Ende jeweils nicht auf ein spezielles Ende des PEDs bezogen, sondern bezieht sich auf ein Ende des PEDs in Bezug auf den Flugzeugsitz. Dadurch kann das PED besonders vorteilhaft in der Flugzeugsitzhaltevorrichtung befestigt werden.

Ferner wird vorgeschlagen, dass die Aufnahmeeinheit zur Befestigung des oberen Endes des PEDs in einem Bereich oberhalb der als Rückenlehnenbrücke ausgebildeten Flugzeugsitzträgereinheit angeordnet ist. Unter einem "Bereich oberhalb der als Rückenlehnenbrücke ausgebildeten Flugzeugsitzträgereinheit" soll dabei insbesondere ein Bereich verstanden werden, der, von der als Rückenlehne ausgebildeten Flugzeugsitzträgereinheit gesehen, in einer Richtung, die von der Aufständerebene abgewandt ist, angeordnet ist. Der Bereich oberhalb der Flugzeugsitzträgereinheit ist dabei von einer Rückseite der Rückenlehne oder einer Rückseite einer Kopfstütze des Flugzeugsitzes gebildet. Dadurch kann die Aufnahmeeinheit besonders vorteilhaft zur Anbringung eines PEDs angeordnet werden.

Es wird weiterhin vorgeschlagen, dass die Aufnahmeeinheit als eine schwenkbare Lasche ausgebildet ist. Unter einer "schwenkbaren Lasche" soll dabei insbesondere ein Element verstanden werden, das mit einem ersten Ende schwenkbar mit der Rückenlehne verbunden ist. Dabei bildet die als schwenkbare Lasche ausgebildete Aufnahmeeinheit an einem zweiten Ende vorteilhaft ein Formschlusselement aus, das zur Aufnahme des oberen Endes des PEDs vorgesehen ist. Dadurch kann die Aufnahmeeinheit besonders einfach und vorteilhaft ausgebildet werden.

Weiter wird vorgeschlagen, dass die Aufnahmeeinheit zumindest ein Abstützelement aufweist, das dazu vorgesehen ist, PEDs verschiedener Größen an der Aufnahmeeinheit abzustützen. Dabei stützen sich unterschiedlich große PEDs vorteilhaft an unterschiedlichen Seitenflächen des Abstützelements ab. Grundsätzlich wäre es auch denkbar, dass sich das PED dabei zusätzlich an einer Rückseite der Rückenlehne abstützt. Dadurch können vorteilhaft einfach PEDs verschiedener Größen von der Aufnahmeeinheit aufgenommen werden.

Es wird weiter vorgeschlagen, dass das bewegbare Halteelement zumindest eine Ausnehmung aufweist, die sich von einem angebundenen Ende aus erstreckt. Dadurch können vorteilhaft weitere Elemente, wie insbesondere ein Arretiermechanismus für einen anklappbaren Esstisch, in die Flugzeugsitzträgereinheit integriert werden, die auch bedienbar sind, wenn das bewegbare Halteelement in einem eingeklappten Zustand ist.

Es wird weiter vorgeschlagen, dass der Flugzeugsitz zumindest eine Verriegelungseinheit aufweist, die das bewegbare Halteelement in einem eingeklappten Zustand fixiert. Unter einer "Verriegelungseinheit" soll dabei insbesondere eine Einheit verstanden werden, die zumindest in dem eingeklappten Zustand zumindest eine definierte Schließkraft auf das Halteelement ausübt, die das Halteelement in dem eingeklappten Zustand hält. Grundsätzlich ist es auch denkbar, dass die Verriegelungseinheit von einem federbelasteten Element, wie beispielsweise von einem kugelförmigen Druckstück, ausgebildet ist, das beispielsweise in dem Halteelement angeordnet ist, über eine Außenfläche des Halteelements hinausragt und in einem eingeklappten Zustand des Halteelements in eine Ausnehmung, die in die Flugzeugsitzträgereinheit eingebracht ist, einrastet und das Halteelement so zu der Flugzeugsitzträgereinheit fixiert. Grundsätzlich ist es natürlich auch denkbar, dass eine Anordnung des Druckstücks und der Ausnehmung in den entsprechenden Elementen umgekehrt ist. Dabei müsste zur Verstellung des Halteelements aus dem eingeklappten Zustand eine Kraft auf das Halteelement ausgeübt werden, durch die das federbelastete Element aus der Ausnehmung ausgelenkt wird und das Halteelement so freigibt. Grundsätzlich ist es auch denkbar, dass die Verriegelungseinheit auf eine andere, dem Fachmann als sinnvoll erscheinende Weise ausgebildet ist, wie beispielsweise durch eine Rastnase oder einen Push-Push-Verschluss, wie beispielsweise einen Druckmagnetschnepper. Dadurch kann in dem eingeklappten Zustand ein unbeabsichtigtes Bewegen des Halteelements in einen geöffneten Zustand verhindert werden.

Ferner wird vorgeschlagen, dass der Flugzeugsitz zumindest ein Federelement aufweist, das zumindest in einem Betriebszustand eine Schließkraft auf das Halteelement und/oder die Aufnahmeeinheit ausübt. Unter einem "Federelement" soll dabei insbesondere eine Feder, wie beispielsweise eine Spiralfeder, eine Blattfeder, eine Gasdruckfeder oder ein aus einem anderen elastischen Material gebildetes Federelement verstanden werden. Dadurch kann die Verriegelungseinheit besonders vorteilhaft ausgebildet werden und gleichzeitig ein PED in einem in der Befestigungseinheit gehaltenen Zustand zwischen dem Halteelement und dem Aufnahmeeinheit verklemmt werden und so besonders sicher in der Befestigungseinheit angeordnet werden.

Weiter wird vorgeschlagen, dass die Aufnahmeeinheit in einer Höhe verstellbar ist. Unter "in der Höhe verstellbar" soll dabei insbesondere verstanden werden, dass die gesamte Aufnahmeeinheit zu der Rückenlehne in der Rückenlehnenlängserstreckung verschoben werden kann. Dabei ist die Aufnahmeeinheit vorzugsweise an einer Verbindungsstelle, an der die Aufnahmeeinheit schwenkbar an die Rückenlehne gekoppelt ist, in der Höhe verschiebbar. Zur Höhenverstellung der Aufnahmeeinheit weist die Befestigungseinheit vorzugsweise eine Linearführung auf, mit der die Aufnahmeeinheit gekoppelt ist. Dabei ist die Aufnahmeeinheit vorzugsweise in jede beliebige Stellung in der Linearführung frei verschiebbar und ist dabei vorzugsweise arretierfrei. Dadurch kann die Befestigungseinheit vorteilhaft an verschieden große PEDs angepasst werden und diese jeweils sicher an der Rückenlehne befestigen.

Der erfindungsgemäße Flugzeugsitz soll hierbei nicht auf die oben beschriebene Anwendung und Ausführungsform beschränkt sein. Insbesondere kann der erfindungsgemäße Flugzeugsitz zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In der Zeichnung sind zwei Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen, solange der resultierende Gegenstand zum Umfang gehört, der von den Ansprüchen definiert ist.

Es zeigen:
- Fig. 1: eine schematische Darstellung eines Teils eines erfindungsgemäßen Flugzeugsitzes in einem ersten Ausführungsbeispiel mit einer Flugzeugsitzhaltevorrichtung und einer Befestigungseinheit in einem geöffneten Zustand,
- Fig. 2: eine schematische Darstellung der Flugzeugsitzhaltevorrichtung mit einem darin angeordneten PED,
- Fig. 3: eine Detailansicht einer Flugzeugsitzträgereinheit mit der Befestigungseinheit in einem eingeklappten Zustand,
- Fig. 4: eine schematische Darstellung einer Flugzeugsitzhaltevorrichtung in einem zweiten Ausführungsbeispiel mit einem darin angebrachten kleinen PED und
- Fig. 5: eine schematische Darstellung der Flugzeugsitzhaltevorrichtung in dem zweiten Ausführungsbeispiel mit einem darin angebrachten größeren PED.

### Beschreibung der Ausführungsbeispiele

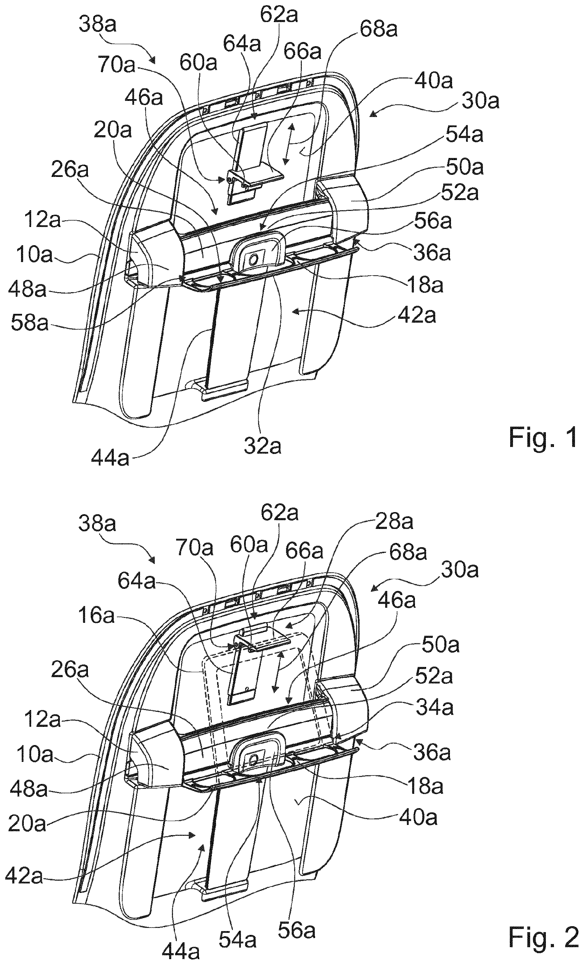

Die Figuren 1 bis 3 zeigen ein erstes Ausführungsbeispiel einer Flugzeugsitzhaltevorrichtung. Die Flugzeugsitzhaltevorrichtung ist Teil eines nur teilweise dargestellten Flugzeugsitzes 38a. Der Flugzeugsitz 38a ist in einem montierten Zustand in einem nicht näher dargestellten Flugzeug aufgeständert. Dazu weist der Flugzeugsitz 38a eine nicht näher dargestellte Aufständereinheit auf, mittels der der Flugzeugsitz 38a auf einer Aufständerebene in dem Flugzeug aufgeständert ist. Die Aufständerebene ist dabei von einem Kabinenboden des Flugzeugs gebildet. Dabei ist der Flugzeugsitz 38a als ein Teil einer nicht näher dargestellten Flugzeugsitzreihe ausgebildet. Die Flugzeugsitzreihe ist dabei von drei nebeneinander angeordneten, gleich ausgebildeten Flugzeugsitzen 38a gebildet. Die Aufständereinheit ist dabei zur gemeinsamen Aufständerung aller Flugzeugsitze 38a einer Flugzeugsitzreihe vorgesehen. Grundsätzlich ist es auch denkbar, dass die Flugzeugsitzreihe eine andere Anzahl an Flugzeugsitzen 38a aufweist oder dass der Flug-zeugsitz 38a als ein Einzelsitz ausgebildet ist. Der Flugzeugsitz 38a umfasst einen nicht näher dargestellten Sitzboden, der auf der Aufständereinheit befestigt ist. Der Sitzboden bildet eine Sitzfläche aus, auf der ein Fluggast sitzen kann. Der Flugzeugsitz 38a weist ferner eine Rückenlehne 10a auf. Die Rückenlehne 10a ist mit dem Sitzboden gekoppelt. Die Rückenlehne 10a ist dabei ebenfalls mit der Aufständereinheit gekoppelt. Dabei ist die Rückenlehne 10a in einer aufrechten Stellung, also einer TTL-Position, senkrecht zu der Aufständerebene ausgerichtet. Die Rückenlehne 10a ist vorzugsweise schwenkbar mit dem Sitzboden gekoppelt, wodurch verschiedene Sitzstellungen für den Fluggast realisierbar sind. Die Rückenlehne 10a weist eine Rückseite 40a auf. Die Rückseite 40a der Rückenlehne 10a ist einem hinter dem Flugzeugsitz 38a angeordneten, weiteren Flugzeugsitz zugewandt. Der Flugzeugsitz 38a umfasst einen nicht näher dargestellten schwenkbaren Esstisch, der an der Rückseite 40a der Rückenlehne 10a angeordnet ist. Der schwenkbare Esstisch ist in einem mittleren Bereich 42a der Rückenlehne 10a angeordnet. Der schwenkbare Esstisch ist in einem unbenutzten Zustand an die Rückseite 40a der Rückenlehne 10a angeklappt. Dabei liegt der schwenkbare Esstisch in dem unbenutzten Zustand an der Rückseite 40a der Rückenlehne 10a an und verläuft dabei parallel zu dieser. Weiter umfasst der Flugzeugsitz 38a eine Literaturtasche 44a. Die Literaturtasche 44a ist in einem Bereich hinter dem Esstisch in dessen unbenutztem Zustand angeordnet. Die Literaturtasche 44a ist dazu vorgesehen, dass Literatur in ihr aufbewahrt werden kann. Dabei weist die Literaturtasche 44a eine Öffnung 46a auf, über die Literatur und andere Gegenstände in die Literaturtasche 44a eingeführt werden können. Die Öffnung 46a der Literaturtasche 44a ist dabei oberhalb des Esstisches in dessen unbenutztem Zustand angeordnet. Dadurch kann Literatur in die Literaturtasche 44a eingeführt werden, auch wenn der Esstisch an der Rückseite 40a der Rückenlehne 10a angeklappt ist. Denkbar ist auch, dass der Flugzeugsitz 38a zumindest eine Armlehne (nicht dargestellt) aufweist.

Die Flugzeugsitzhaltevorrichtung umfasst eine Flugzeugsitzträgereinheit 12a. Die Flugzeugsitzträgereinheit 12a ist als eine Rückenlehnenbrücke ausgebildet. Die Flugzeugsitzträgereinheit 12a weist eine Trägerlängserstreckung auf, die im Wesentlichen parallel zu einer von der Rückenlehne 10a aufgespannten Ebene ausgerichtet ist. Zudem ist die Trägerlängserstreckung im Wesentlichen parallel zu dem Sitzboden ausgerichtet. Die Flugzeugsitzträgereinheit 12a ist in dem montierten Zustand fest mit der Rückenlehne 10a verbunden. Die als Rückenlehnenbrücke ausgebildete Flugzeugsitzträgereinheit 12a verbindet eine linke Seite der Rückenlehne 10a mit einer rechten Seite der Rückenlehne 10a. Dabei ist die Flugzeugsitzträgereinheit 12a unmittelbar oberhalb des Esstisches in dem angeklappten Zustand angeordnet. Auf der rechten Seite und der linken Seite der Rückenlehne 10a weist die Flugzeugsitzträgereinheit 12a jeweils einen Anbindungsbereich 48a, 50a auf, in dem die als Rückenlehnenbrücke ausgebildete Flugzeugsitzträgereinheit 12a jeweils mit der Rückenlehne 10a verbunden ist. Zwischen den beiden Anbindungsbereichen 48a, 50a weist die Flugzeugsitzträgereinheit 12a einen Mittelbereich 52a auf. Der Mittelbereich 52a ist mit den Anbindungsbereichen 48a, 50a verbunden. Dabei ist der Mittelbereich 52a vorzugsweise einstückig mit den Anbindungsbereichen 48a, 50a ausgebildet. Der Mittelbereich 52a ist dabei beabstandet zu der Rückseite 40a der Rückenlehne 10a angeordnet. Ein Raum, der zwischen dem Mittelbereich 52a der Flugzeugsitzträgereinheit 12a und der Rückseite 40a der Rückenlehne 10a aufgespannt wird, bildet die Öffnung 46a der Literaturtasche 44a. Die Flugzeugsitzträgereinheit 12a umfasst weiter einen Arretiermechanismus 54a zur Sicherung des Esstisches in einem angeklappten Zustand. Der Mittelbereich 52a weist mittig einen Aufnahmebereich 56a für den Arretiermechanismus 54a auf. Grundsätzlich ist es auch denkbar, dass der Aufnahmebereich 56a für den Arretiermechanismus 54a auch außermittig in dem Mittelbereich 52a angeordnet ist. Dabei ist der Arretiermechanismus 54a in den Zeichnungen nicht näher dargestellt und soll im Folgenden auch nicht näher erläutert werden, da er aus dem Stand der Technik ausreichend bekannt ist.

Die Flugzeugsitzhaltevorrichtung umfasst weiter eine Befestigungseinheit 14a. Die Befestigungseinheit 14a ist dazu vorgesehen, ein PED 16a austauschbar und bedienbar an der Rückenlehne 10a zu befestigen. Ein PED 16a ist dabei beispielsweise als ein Tablet-Computer oder ein Smartphone ausgebildet. Dabei ist das PED 16a mittels der Befestigungseinheit 14a so an der Rückenlehne 10a angebracht, dass ein Flugzeugpassagier, der auf dem entsprechenden, hinter dem Flugzeugsitz 38a mit der Befestigungseinheit 14a angeordneten Flugzeugsitz 38a sitzt, das PED 16a vorteilhaft einfach bedienen kann. Die Befestigungseinheit 14a ist dabei in die Flugzeugsitzträgereinheit 12a integriert. Die Befestigungseinheit 14a umfasst ein bewegbares Halteelement 18a. Das bewegbare Halteelement 18a ist in die Flugzeugsitzträgereinheit 12a integriert. Das bewegbare Halteelement 18a weist einen eingeklappten Zustand und einen geöffneten Zustand auf. In dem eingeklappten Zustand ist das bewegbare Halteelement 18a möglichst platzsparend an der Flugzeugsitzträgereinheit 12a angeordnet. In dem eingeklappten Zustand kann das PED 16a nicht von dem Halteelement 18a gehalten werden. In dem geöffneten Zustand ist das bewegliche Halteelement 18a ausgefahren und das PED 16a kann von dem Halteelement 18a gehalten werden. Das bewegbare Halteelement 18a ist dabei als eine schwenkbare Klappe ausgebildet. Dabei ist das Halteelement 18a an einem ersten, angebundenen Ende 34a schwenkbar mit der Flugzeugsitzträgereinheit 12a gekoppelt. An dem ersten, angebundenen Ende 34a weist das bewegbare Halteelement 18a dabei eine Ausnehmung 32a auf. Die Ausnehmung 32a ist dabei mittig in dem bewegbaren Halteelement 18a angeordnet. Die Ausnehmung 32a weist dabei eine Kontur auf, die einer Kontur des Aufnahmebereichs 56a des Arretiermechanismus 54a entspricht. In dem eingeklappten Zustand des bewegbaren Halteelements 18a umschließt das Halteelement 18a den Aufnahmebereich 56a des Arretiermechanismus 54a in drei Richtungen, gibt den Arretiermechanismus 54a aber nach hinten frei. Dadurch kann der Arretiermechanismus 54a sowohl in dem eingeklappten Zustand als auch in dem geöffneten Zustand des Halteelements 18a von einem Fluggast betätigt werden.

Zur schwenkbaren Lagerung des als schwenkbare Klappe ausgebildeten bewegbaren Halteelements 18a umfasst die Befestigungseinheit 14a ein Scharnier 58a. Das Scharnier 58a ist von dem bewegbaren Halteelement 18a und der Flugzeugsitzträgereinheit 12a gebildet. Ein halteelementseitiger Teil des Scharniers 58a ist von einstückig mit dem Halteelement 18a ausgebildeten Stiftelementen gebildet. Dabei ist im Bereich des ersten angebundenen Endes 34a des Halteelements 18a an Seitenflächen, die in montiertem Zustand den Anbindungsbereichen 48a, 50a der Flugzeugsitzträgereinheit 12a zugewandt sind, jeweils ein Stiftelement angeordnet, das sich in Richtung der Anbindungsbereiche 48a, 50a der Flugzeugsitzträgereinheit 12a erstreckt. Auf innen liegenden Seitenflächen, die die Ausnehmung 32a des Halteelements 18a bilden, ist fluchtend zu den anderen Stiftelementen ebenfalls jeweils ein Stiftelement angeordnet. Die beiden innen liegenden Stiftelemente erstrecken sich dabei von der jeweiligen Seitenfläche der Ausnehmung 32a nach innen, in montiertem Zustand in Richtung des Aufnahmebereichs 56a des Arretiermechanismus 54a. Alle Stiftelemente, die in den Zeichnungen nicht näher dargestellt sind, liegen in einer Flucht und bilden den halteelementseitigen Teil des Scharniers 58a aus. Der Teil des Scharniers 58a, der von der Flugzeugsitzträgereinheit 12a gebildet ist, ist von Aufnahmelöchern gebildet, in die die Stifte des Halteelements 18a in montiertem Zustand eingreifen. Die Aufnahmelöcher sind dabei in eine Außenfläche des Aufnahmebereichs 56a des Arretiermechanismus 54a und in nach innen gerichteten Seitenflächen der Anbindungsbereiche 48a, 50a der Flugzeugsitzträgereinheit 12a eingebracht. Die Aufnahmelöcher weisen dabei jeweils einen kreisrunden Querschnitt auf. Die Aufnahmelöcher sind dabei an einem unteren Ende der Flugzeugsitzträgereinheit 12a angeordnet, das dem Esstisch in einem eingeklappten Zustand des Esstisches zugewandt ist. Die Stiftelemente des Scharniers 58a können in den Aufnahmelöchern rotieren, wodurch sich das Halteelement 18a zu der Flugzeugsitzträgereinheit 12a schwenken lässt. Zur Montage wird das Halteelement 18a an die Flugzeugsitzträgereinheit 12a herangeführt und die Stifte des Scharniers 58a werden durch Aufbringen einer Montagekraft werkzeugfrei in die Aufnahmelöcher des Scharniers 58a gebracht. Dadurch kann das Halteelement 18a vorteilhaft werkzeugfrei und einfach an die Flugzeugsitzträgereinheit 12a montiert werden. Zum Demontieren des Halteelements 18a von der Flugzeugsitzträgereinheit 12a muss eine ausreichend große Demontagekraft auf das Halteelement 18a ausgeübt werden, sodass sich die Stiftelemente des Scharniers 58a aus den Aufnahmelöchern des Scharniers 58a lösen. Dadurch kann das Halteelement 18a einfach und werkzeugfrei ausgetauscht werden. Grundsätzlich wäre es dabei auch denkbar, dass weitere Scharniere und/oder Elemente sowie anders ausgestaltete Scharniere zur Anbindung des Halteelements 18a verwendet werden.

Das bewegbare Halteelement 18a umfasst ein Abstützelement 20a. Das Abstützelement 20a ist dazu vorgesehen, eine Abstützfläche für das PED 16a bereitzustellen. Ein unteres Ende des PEDs 16a stützt sich dabei in einem Zustand, in dem das PED 16a in der Befestigungseinheit 14a angeordnet ist, an der Abstützfläche des Abstützelements 20a ab. Das Abstützelement 20a ist dabei als eine Erhebung ausgebildet. Das Abstützelement 20a ist dabei auf einer Innenseite des Halteelements 18a angeordnet, die in dem eingeklappten Zustand des Halteelements 18a der Rückenlehne 10a zugewandt ist. Grundsätzlich ist es auch denkbar, dass das Abstützelement 20a anders, beispielsweise als eine Vertiefung ausgebildet ist. Eine Außenkontur 22a des Halteelements 18a, die in montiertem Zustand von der Rückenlehne 10a abgewandt ist, verläuft in eingeklapptem Zustand des Halteelements 18a eben zu einer Außenkontur 24a der Flugzeugsitzträgereinheit 12a. Dadurch bildet die Flugzeugsitzträgereinheit 12a zusammen mit dem Halteelement 18a in einem eingeklappten Zustand des Halteelements 18a eine ebene Außenkontur aus. Dabei sind insbesondere keine störenden Kanten und Höhenunterschiede zwischen den Außenkonturen 22a, 24a des Halteelements 18a und der Flugzeugsitzträgereinheit 12a vorhanden.

Die Flugzeugsitzträgereinheit 12a weist eine Tasche 26a auf, in der das bewegliche Halteelement 18a in seinem eingeklappten Zustand angeordnet ist. Die Tasche 26a ist dabei in dem Mittelbereich 52a der Flugzeugsitzträgereinheit 12a angeordnet. Die Tasche 26a erstreckt sich dabei von dem einen Anbindungsbereich 48a der Flugzeugsitzträgereinheit 12a bis zu dem anderen Anbindungsbereich 50a der Flugzeugsitzträgereinheit 12a. Der Aufnahmebereich 56a des Arretiermechanismus 54a ist in der Tasche 26a der Flugzeugsitzträgereinheit 12a angeordnet. Dabei begrenzt der Aufnahmebereich 56a die Tasche 26a der Flugzeugsitzträgereinheit 12a. Seitlich ist die Tasche 26a von den Anbindungsbereichen 48a, 50a der Flugzeugsitzträgereinheit 12a begrenzt. Das Halteelement 18a erstreckt sich in einem montierten Zustand lediglich über einen Teil der als Rückenlehnenbrücke ausgebildeten Flugzeugsitzträgereinheit 12a. Das Halteelement 18a erstreckt sich dabei zwischen den beiden Anbindungsbereichen 48a, 50a der Flugzeugsitzträgereinheit 12a.

Zur Befestigung eines oberen Endes des PEDs 16a weist die Flugzeugsitzhaltevorrichtung eine Aufnahmeeinheit 28a auf. Die Aufnahmeeinheit 28a ist dazu vorgesehen, das obere Ende des PEDs 16a an der Rückenlehne 10a zu fixieren und so das PED 16a sicher in der Flugzeugsitzhaltevorrichtung zu befestigen. Dabei ist die Aufnahmeeinheit 28a zur Befestigung des oberen Endes des PEDs 16a in einem Bereich 30a oberhalb der als Rückenlehnenbrücke ausgebildeten Flugzeugsitzträgereinheit 12a angeordnet. Dabei ist die Aufnahmeeinheit 28a als schwenkbare Lasche ausgebildet. An einem ersten Ende ist die Aufnahmeeinheit 28a schwenkbar mit der Rückenlehne 10a gekoppelt. An einem zweiten Ende weist die als schwenkbare Lasche ausgebildete Aufnahmeeinheit 28a ein Formschlusselement 60a auf. Das Formschlusselement 60a ist als ein Haken ausgebildet. Das als Haken ausgebildete Formschlusselement 60a erstreckt sich dabei an dem zweiten vorderen Ende in einem montierten Zustand nach unten in Richtung der Befestigungseinheit 14a. Dabei ist die Aufnahmeeinheit 28a in einer Höhe verstellbar. Dazu weist die Flugzeugsitzhaltevorrichtung eine Linearführung 62a auf. Die Linearführung 62a umfasst ein erstes Führungselement 64a. Das erste Führungselement 64a ist als eine Schiene ausgebildet. Das als Schiene ausgebildete erste Führungselement 64a ist fest an der Rückseite 40a der Rückenlehne 10a angeordnet. Das erste Führungselement 64a ist dabei in dem Bereich 30a oberhalb der als Rückenlehnenbrücke ausgebildeten Flugzeugsitzträgereinheit 12a angeordnet. Die Linearführung 62a umfasst ein zweites Führungselement 66a. Das zweite Führungselement 66a ist linear verschiebbar mit dem ersten, als Schiene ausgebildeten Führungselement 64a gekoppelt. Das zweite Führungselement 66a ist formschlüssig mit dem ersten Führungselement 64a verbunden. Das zweite Führungselement 66a kann dabei entlang einer Verschiebeachse 68a des ersten Führungselements 64a zu dem ersten Führungselement 64a verschoben werden. Die Verschiebeachse 68a des ersten Führungselements 64a ist dabei parallel zu einer Rückenlehnenlängserstreckung ausgerichtet. Dadurch lässt sich das zweite Führungselement 66a in einer Höhe zu der Rückenlehne 10a verschieben. Das erste Ende der Aufnahmeeinheit 28a ist schwenkbar mit dem zweiten Führungselement 66a verbunden. Dazu weist die Aufnahmeeinheit 28a ein Scharnier 70a auf, das die Aufnahmeeinheit 28a schwenkbar mit dem zweiten Führungselement 66a koppelt. Durch die in der Höhe verschiebbare Aufnahmeeinheit 28a können verschieden große PEDs 16a einfach mittels der Flugzeugsitzhaltevorrichtung an der Rückenlehne 10a angebracht werden.

Weiter umfasst die Flugzeugsitzhaltevorrichtung eine Verriegelungseinheit 36a. Die Verriegelungseinheit 36a ist dazu vorgesehen, das bewegbare Halteelement 18a in dem eingeklappten Zustand zu fixieren. Die Verriegelungseinheit 36a hält das Halteelement 18a mittels einer Schließkraft in dem eingeklappten Zustand. Dazu umfasst die Verriegelungseinheit 36a ein nicht näher dargestelltes Federelement. Das Federelement ist dabei in die Flugzeugsitzträgereinheit 12a integriert und von außen nicht zu sehen. Das Federelement ist mit dem Halteelement 18a gekoppelt. Dabei übt das Federelement eine Federkraft auf das Halteelement 18a aus, welche das Halteelement 18a mit seinem zweiten Ende, an dem das Abstützelement 20a angeordnet ist, in Richtung der Rückenlehne 10a drückt. Die Federkraft des Federelements bildet dabei die Schließkraft der Verriegelungseinheit 36a aus. Dadurch wird das Halteelement 18a von dem Federelement in seinen eingeklappten Zustand gedrückt. Um das Halteelement 18a aus seinem eingeklappten Zustand in seinen geöffneten Zustand zu bewegen, muss das Halteelement gegen die Federkraft, die das Federelement auf das Halteelement 18a ausübt, bewegt werden. In einem Zustand, in dem ein PED 16a auf dem Halteelement 18a aufliegt, drückt die Schließkraft des Federelements das PED 16a nach oben. Ist das PED 16a mit seinem oberen Ende in der Aufnahmeeinheit 28a angeordnet, klemmt das Federelement das PED 16a durch die Federkraft zwischen dem Halteelement 18a und der Aufnahmeeinheit 28a ein, wodurch das PED 16a sicher an der Rückenlehne angeordnet ist.

Will ein Passagier ein PED 16a an der Flugzeugsitzhaltevorrichtung anbringen, muss er zunächst das Halteelement 18a der Befestigungseinheit 14a gegen die Schließkraft des Federelements aus der eingeklappten Stellung heraus bewegen. Nun kann der Passagier das PED 16a mit dem unteren Ende auf das Abstützelement 20a des Halteelements 18a auflegen. Nun kann der Passagier die Aufnahmeeinheit 28a mittels der Linearführung 62a in der Höhe so ausrichten, dass die Aufnahmeeinheit 28a das obere Ende des PEDs 16a mit seinem Formschlusselement 60a umgreifen kann. Er schwenkt die als schwenkbare Lasche ausgebildete Aufnahmeeinheit 28a nach unten, sodass das obere Ende des PEDs 16a in dem Formschlusselement 60a der Aufnahmeeinheit 28a angeordnet ist. Mittels einer nicht näher dargestellten Arretierung kann die Aufnahmeeinheit 28a in einer Stellung, in der die Aufnahmeeinheit 28a das PED 16a mit seinem Formschlusselement 60a teilweise umschließt, arretiert werden. Durch die Schließkraft der Federeinheit und die Arretierung der Aufnahmeeinheit 28a wird das PED 16a zwischen dem Halteelement 18a und der verriegelten Aufnahmeeinheit 28a eingeklemmt und so bedienbar und gegen ein Herausfallen gesichert in der Flugzeugsitzhaltevorrichtung und dadurch an der Rückenlehne 10a des Flugzeugsitzes 38a angebracht. Grundsätzlich ist es dabei denkbar, dass Bereiche, in denen das PED 16a auf dem Halteelement 18a, der Aufnahmeeinheit 28a und/oder auf der Rückseite 40a der Rückenlehne 10a aufliegt, durch eine Beschichtung, eine Beflockung, eine Beklebung oder durch eine Verwendung eines weichen Materials besonders vorteilhaft und schonend für das PED 16a ausgebildet sind.

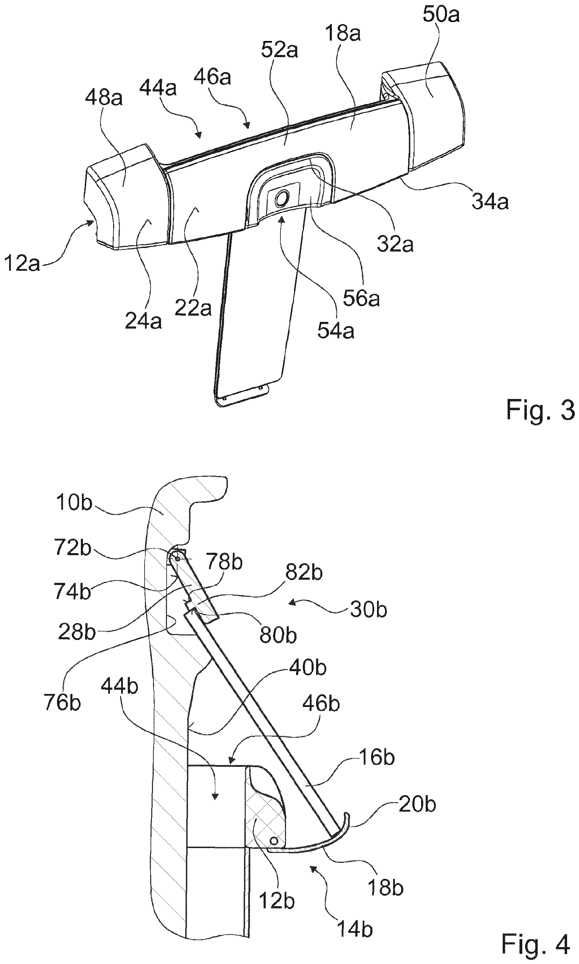

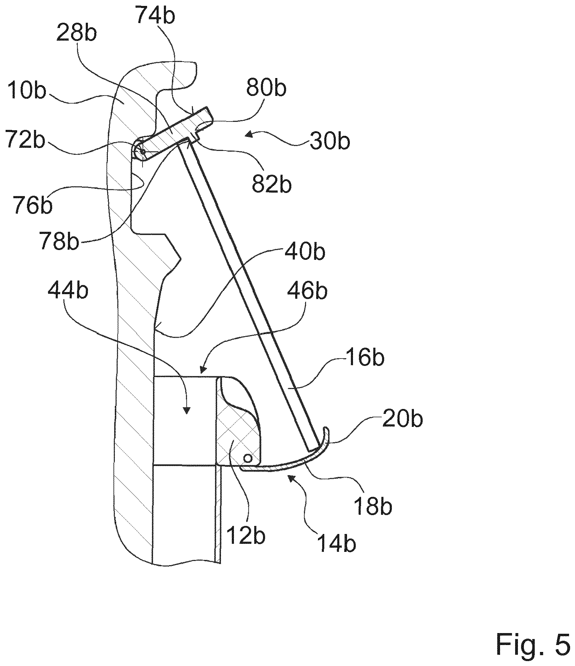

In Fig. 4 und 5 ist ein weiteres Ausführungsbeispiel der Erfindung gezeigt. Die nachfolgenden Beschreibungen und die Zeichnungen beschränken sich im Wesentlichen auf die Unterschiede zwischen den beiden Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung des anderen Ausführungsbeispiels, insbesondere der Fig. 1 bis 3, verwiesen werden kann. Zur Unterscheidung der Ausführungsbeispiele ist der Buchstabe a den Bezugszeichen des Ausführungsbeispiels in Fig. 1 bis 3 nachgestellt. In dem Ausführungsbeispiel der Fig. 4 und 5 ist der Buchstabe a durch den Buchstaben b ersetzt.

Die Figuren 4 und 5 zeigen ein zweites Ausführungsbeispiel einer Flugzeugsitzhaltevorrichtung. Die Flugzeugsitzhaltevorrichtung ist Teil eines nur teilweise dargestellten Flugzeugsitzes 38b. Der Flugzeugsitz 38b weist eine Rückenlehne 10b auf. Die Rückenlehne 10b weist eine Rückseite 40b auf. Die Rückseite 40b der Rückenlehne 10b ist einem hinter dem Flugzeugsitz 38b angeordneten, weiteren Flugzeugsitz zugewandt. Weiter umfasst der Flugzeugsitz 38b eine Literaturtasche 44b. Die Literaturtasche 44b ist in einem Bereich hinter einem Esstisch in dessen unbenutztem Zustand angeordnet. Dabei weist die Literaturtasche 44b eine Öffnung 46b auf, über die Literatur und andere Gegenstände in die Literaturtasche 44b eingeführt werden können. Die Flugzeugsitzhaltevorrichtung umfasst eine Flugzeugsitzträgereinheit 12b. Die Flugzeugsitzträgereinheit 12b ist als eine Rückenlehnenbrücke ausgebildet. Die Flugzeugsitzträgereinheit 12b ist im Wesentlichen gleich ausgebildet wie in dem ersten Ausführungsbeispiel aus den Figuren 1 bis 3. Die Flugzeugsitzhaltevorrichtung umfasst weiter eine Befestigungseinheit 14b. Die Befestigungseinheit 14b ist dazu vorgesehen, ein PED 16b austauschbar und bedienbar an der Rückenlehne 10b zu befestigen. Die Befestigungseinheit 14b umfasst ein bewegbares Halteelement 18b. Das bewegbare Halteelement 18b ist in einen Mittelbereich 52b der Flugzeugsitzträgereinheit 12b integriert und ist identisch ausgebildet zu dem Halteelement aus dem ersten Ausführungsbeispiel aus den Figuren 1 bis 3.

Zur Befestigung eines oberen Endes des PEDs 16b weist die Flugzeugsitzhaltevorrichtung eine Aufnahmeeinheit 28b auf. Die Aufnahmeeinheit 28b ist im Gegensatz zu dem ersten Ausführungsbeispiel anders ausgestaltet. Die Aufnahmeeinheit 28b ist als eine schwenkbare Lasche ausgebildet. Dabei ist die Aufnahmeeinheit 28b an einer festen Position an der Rückenlehne 10b angeordnet. Die Aufnahmeeinheit 28b ist dabei insbesondere nicht in einer Höhe zu der Rückenlehne verstellbar. Zur Anbindung der Aufnahmeeinheit 28b an der Rückenlehne 10b weist die Flugzeugsitzhaltevorrichtung ein Scharnier 72b auf. Das Scharnier 72b ist fest auf der Rückseite 40b der Rückenlehne 10b angebracht. Dabei ist das Scharnier 72b und dadurch die Aufnahmeeinheit 28b in einem Bereich 30b oberhalb der Flugzeugsitzträgereinheit 12b angeordnet. Das Scharnier 72b lagert die Aufnahmeeinheit 28b an einem ersten oberen Ende, das in montiertem Zustand der Flugzeugsitzträgereinheit 12b abgewandt ist. Ein zweites unteres Ende der Aufnahmeeinheit 28b, das in montiertem Zustand der Flugzeugsitzträgereinheit 12b zugewandt ist, ist mittels des Scharniers 72b von der Rückseite 40b der Rückenlehne 10b weg schwenkbar. Die Flugzeugsitzhaltevorrichtung umfasst ein Federelement. Das Federelement ist dazu vorgesehen, eine Schließkraft auf die Aufnahmeeinheit 28b auszuüben. Dazu ist das Federelement in das Scharnier 72b integriert. Das Federelement ist dabei nicht näher dargestellt. Das Federelement ist als eine Spiralfeder ausgebildet. Eine Federkraft des Federelements erzeugt durch eine Kopplung mit der Aufnahmeeinheit 28b ein Moment auf die Aufnahmeeinheit 28b. Das Moment drückt das zweite Ende der Aufnahmeeinheit 28b mit einer Innenseite 74b in Richtung der Rückseite 40b der Rückenlehne 10b. Dadurch wird die Aufnahmeeinheit 28b von dem Federelement in eine Verstaustellung gedrückt. Die Rückenlehne 10b bildet zur Aufnahme der Aufnahmeeinheit 28b eine Ausnehmung 76b aus. Die Ausnehmung 76b ist in die Rückseite 40b der Rückenlehne 10b eingebracht. Dabei ist die Aufnahmeeinheit 28b in der Ausnehmung 76b angeordnet. In der Verstaustellung ist die Aufnahmeeinheit 28b komplett in der Ausnehmung 76b angeordnet.

Die Aufnahmeeinheit 28b umfasst zur Anbindung von verschieden großen PEDs 16b ein Abstützelement 82b. Das Abstützelement 82b ist dazu vorgesehen, PEDs 16b verschiedener Größen an der Aufnahmeeinheit 28b abzustützen. Das Abstützelement 82b ist an der Innenseite 74b der Aufnahmeeinheit 28b angeordnet. Das Abstützelement 82b ist dabei als eine Erhebung ausgebildet. Das als Erhebung ausgebildete Abstützelement 82b erstreckt sich von der Innenseite 74b weg. Ein PED 16b kann sich nun, je nach Größe, an einer in Richtung des ersten Endes der Aufnahmeeinheit 28b gerichteten Seitenfläche 78b des Abstützelements 82b oder an einer in Richtung des zweiten Endes der Aufnahmeeinheit 28b gerichteten Seitenfläche 80b des Abstützelements 82b abstützen. Je nach Größe des PEDs 16b wird die Aufnahmeeinheit 28b weiter aus ihrer Verstaustellung herausgeschwenkt. Dabei wird die Aufnahmeeinheit 28b gegen die Federkraft des Federelements aufgeschwenkt, wodurch das Federelement auf das PED 16b drückt und dieses dadurch zwischen der Aufnahmeeinheit 28b und dem Halteelement 18b der Befestigungseinheit 14b einklemmt. In diesem Ausführungsbeispiel, in dem die Aufnahmeeinheit 28b von dem Federelement belastet ist, kann auf ein Federelement, welches eine Federkraft auf das Halteelement 18b der Befestigungseinheit 14b ausüben würde, verzichtet werden. In der Figur 4 ist ein großes PED 16b (beispielsweise 11 Zoll) gezeigt, das zwischen der Befestigungseinheit 14b und der Aufnahmeeinheit 28b eingeklemmt ist. Figur 5 zeigt ein kleineres PED 16b (beispielsweise 9 Zoll), das zwischen der Befestigungseinheit 14b und der Aufnahmeeinheit 28b eingeklemmt ist. Durch weitere Abstützelemente wäre es denkbar, auch weitere Größen zu befestigen.

### Bezugszeichen

- 10: Rückenlehne
- 12: Flugzeugsitzträgereinheit
- 14: Befestigungseinheit
- 16: PED
- 18: Halteelement
- 20: Abstützelement
- 22: Außenkontur
- 24: Außenkontur
- 26: Tasche
- 28: Aufnahmeeinheit
- 30: Bereich
- 32: Ausnehmung
- 34: angebundenes Ende
- 36: Verriegelungseinheit
- 38: Flugzeugsitz
- 40: Rückseite
- 42: mittlerer Bereich
- 44: Literaturtasche
- 46: Öffnung
- 48: Anbindungsbereich
- 50: Anbindungsbereich
- 52: Mittelbereich
- 54: Arretiermechanismus
- 56: Aufnahmebereich
- 58: Scharnier
- 60: Formschlusselement
- 62: Linearführung
- 64: erstes Führungselement
- 66: zweites Führungselement
- 68: Verschiebeachse
- 70: Scharnier
- 72: Scharnier
- 74: Innenseite
- 76: Ausnehmung
- 78: Seitenfläche
- 80: Seitenfläche
- 82: Abstützelement

## Patentansprüche

1. Flugzeugsitz mit einer Flugzeugsitzhaltevorrichtung, mit zumindest einer Rückenlehne (10a; 10b), mit zumindest einer von einer Rückenlehnenbrücke gebildeten Flugzeugsitzträgereinheit (12a; 12b), die auf einer rechten Seite und einer linken Seite der Rückenlehne (10a) jeweils einen Anbindungsbereich (48a; 50a) aufweist, in dem die als Rückenlehnenbrücke ausgebildete Flugzeugsitzträgereinheit (12a) jeweils mit der Rückenlehne (10a) verbunden ist, wobei die Flugzeugsitzträgereinheit (12a) zwischen den beiden Anbindungsbereichen (48a; 50a) einen Mittelbereich (52a) aufweist, mit einer Literaturtasche (44a), die eine Öffnung (46a) aufweist, über die Literatur und andere Gegenstände in die Literaturtasche (44a) eingeführt werden können, und mit zumindest einer Befestigungseinheit (14a; 14b), die dazu vorgesehen ist, in zumindest einem Betriebszustand zumindest ein PED (16a; 16b) an der Rückenlehne (10a; 10b) austauschbar und bedienbar zu befestigen, wobei die Befestigungseinheit (14a; 14b) zumindest teilweise in die als Rückenlehnenbrücke gebildete Flugzeugsitzträgereinheit (12a; 12b) integriert ist, **dadurch gekennzeichnet, dass** ein Raum, der zwischen dem Mittelbereich (52a) der Flugzeugsitzträgereinheit (12a) und der Rückseite (40a) der Rückenlehne (10a) aufgespannt wird, die Öffnung (46a) der Literaturtasche (44a) bildet.

2. Flugzeugsitz nach Anspruch 1, **dadurch gekennzeichnet, dass** die Befestigungseinheit (14a; 14b) wenigstens ein bewegbares Halteelement (18a; 18b) aufweist, das an die Flugzeugsitzträgereinheit (12a; 12b) angebunden ist.

3. Flugzeugsitz nach Anspruch 2, **dadurch gekennzeichnet, dass** das bewegbare Halteelement (18a; 18b) als eine schwenkbare Klappe ausgebildet ist.

4. Flugzeugsitz nach Anspruch 2 oder 3, **dadurch gekennzeichnet, dass** das bewegbare Halteelement (18a; 18b) zumindest ein Abstützelement (20a; 20b) aufweist, das dazu vorgesehen ist, ein unteres Ende des PEDs (16a; 16b) abzustützen.

5. Flugzeugsitz zumindest nach Anspruch 2, **dadurch gekennzeichnet, dass** das bewegbare Halteelement (18a) eine Außenkontur (22a) ausbildet, die in einem eingeklappten Zustand eben mit einer Außenkontur (24a) der Flugzeugsitzträgereinheit (12a) verläuft.

6. Flugzeugsitz zumindest nach Anspruch 2, **dadurch gekennzeichnet, dass** die Flugzeugsitzträgereinheit (12a) eine Tasche (26a) ausbildet, in der das bewegliche Halteelement (18a) in dem eingeklappten Zustand angeordnet ist.

7. Flugzeugsitz zumindest nach Anspruch 2, **dadurch gekennzeichnet, dass** sich das Halteelement (18a; 18b) lediglich über einen Teil der als Rückenlehnenbrücke ausgebildeten Flugzeugsitzträgereinheit (12a; 12b) erstreckt.

8. Flugzeugsitz nach einem der vorhergehenden Ansprüche, **gekennzeichnet durch** zumindest eine Aufnahmeeinheit (28a; 28b) zur Befestigung eines oberen Endes des PEDs (16a; 16b).

9. Flugzeugsitz nach Anspruch 8, **dadurch gekennzeichnet, dass** die Aufnahmeeinheit (28a; 28b) zur Befestigung des oberen Endes des PEDs (16a; 16b) in einem Bereich (30a; 30b) oberhalb der als Rückenlehnenbrücke ausgebildeten Flugzeugsitzträgereinheit (12a; 12b) angeordnet ist.

10. Flugzeugsitz nach Anspruch 8 oder 9, **dadurch gekennzeichnet, dass** die Aufnahmeeinheit (28a; 28b) als eine schwenkbare Lasche ausgebildet ist.

11. Flugzeugsitz zumindest nach Anspruch 8, **dadurch gekennzeichnet, dass** die Aufnahmeeinheit (28b) zumindest ein Abstützelement (82b) aufweist, das dazu vorgesehen ist, PEDs (16b) verschiedener Größen an der Aufnahmeeinheit (28b) abzustützen.

12. Flugzeugsitz zumindest nach Anspruch 2, **dadurch gekennzeichnet, dass** das bewegbare Halteelement (18a) zumindest eine Ausnehmung (32a) aufweist, die sich von einem angebundenen Ende (34a) aus erstreckt.

13. Flugzeugsitz zumindest nach Anspruch 2, **gekennzeichnet durch** zumindest eine Verriegelungseinheit (36a), die das bewegbare Halteelement (18a) in einem eingeklappten Zustand fixiert.

14. Flugzeugsitz zumindest nach Anspruch 2, **gekennzeichnet durch** zumindest ein Federelement, das zumindest in einem Betriebszustand eine Schließkraft auf das Halteelement (18a) ausübt.

15. Flugzeugsitz zumindest nach Anspruch 8, **gekennzeichnet durch** zumindest ein Federelement, das zumindest in einem Betriebszustand eine Schließkraft auf das die Aufnahmeeinheit (28b) ausübt.

## Claims

1. Aircraft seat with an aircraft seat holding device, with at least one backrest (10a; 10b), with at least one aircraft seat carrier unit (12a; 12b) that is embodied by a backrest bridge and comprises, respectively on a righthand side and a lefthand side of the backrest (10a), a connection region (48a; 50a) in which the aircraft seat carrier unit (12a) that is embodied as a backrest bridge is respectively connected to the backrest (12a),
the aircraft seat carrier unit (12a) comprising between the two connection regions (48a; 50a) a middle region (52a), with a literature pocket (44a) having an opening (46a) via which literature and other objects are introduisible into the literature pocket (44a), and with at least one fastening unit (14a; 14b), which is configured for fastening a PED (16a; 16b) to the backrest (10a; 10b) in an exchangeable and operable manner in at least one operating state, the fastening unit (14a; 14b) being at least partially integrated in the aircraft seat carrier unit (12a; 12b) that is embodied as a backrest bridge, **characterised in that** a space spanned between the middle region (52a) of the aircraft seat carrier unit (12a) and the rear side (40a) of the backrest (10a) forms the opening (46a) of the literature pocket (44a).

2. Aircraft seat according to claim 1, **characterised in that** the fastening unit (14a; 14b) comprises at least one movable holding element (18a; 18b), which is connected to the aircraft seat carrier unit (12a; 12b).

3. Aircraft seat according to claim 2, **characterised in that** the movable holding element (18a; 18b) is embodied as a pivotable flap.

4. Aircraft seat according to claim 2 or 3, **characterised in that** the movable holding element (18a; 18b) comprises at least one support element (20a; 20b), which is configured to support a lower end of the PED (16a; 16b).

5. Aircraft seat at least according to claim 2, **characterised in that** the movable holding element (18a) forms an outer contour (22a) which, in a folded-back state, runs even with an outer contour (24a) of the aircraft seat carrier unit (12a).

6. Aircraft seat at least according to claim 2, **characterised in that** the aircraft seat carrier unit (12a) forms a pocket (26a) in which the movable holding element (18a) is arranged in the folded-back state.

7. Aircraft seat at least according to claim 2, **characterised in that** the holding element (18a; 18b) extends only over a portion of the aircraft seat carrier unit (12a; 12b) that is embodied as a backrest bridge.

8. Aircraft seat according to one of the preceding claims, **characterised by** at least one receiving unit (28a; 28b) for fastening an upper end of the PED (16a; 16b).

9. Aircraft seat according to claim 8, **characterised in that,** for fastening the upper end of the PED (16a; 16b), the receiving unit (28a; 28b) is arranged in a region (30a; 30b) above the aircraft seat carrier unit (12a; 12b) that is embodied as a backrest bridge.

10. Aircraft seat according to claim 8 or 9, **characterised in that** the receiving unit (28a; 28b) is embodied as a pivotable lug.

11. Aircraft seat at least according to claim 8, **characterised in that** the receiving unit (28b) comprises at least one support element (82b), which is configured to support PEDs (16b) of different sizes on the receiving unit (28b).

12. Aircraft seat at least according to claim 2, **characterised in that** the movable holding element (18a) comprises at least one recess (32a) extending from a connected end (34a).

13. Aircraft seat at least according to claim 2, **characterised by** at least one locking unit (36a) fixating the movable holding element (18a) in a folded-back state.

14. Aircraft seat at least according to claim 2, **characterised by** at least one spring element exerting, in at least one operating state, a closing force on the holding element (18a).

15. Aircraft seat at least according to claim 8, **characterised by** at least one spring element exerting, in at least one operating state, a closing force on the receiving unit (28b).

## Revendications

1. Siège d'avion avec un dispositif rétenteur de siège d'avion, avec au moins un dossier (10a ; 10b), avec au moins une unité de support de siège d'avion (12a ; 12b), qui est réalisée par un pont de dossier et comporte, sur un côté droit et un côté gauche du dossier (10a ; 10b), au moins une zone de raccordement (48a ; 50) respectivement, dans lequel l'unité de support de siège d'avion (12a) est respectivement raccordée au dossier (10a), l'unité de support de siège d'avion (12a) comprenant une partie médiane (52a) entre les deux zones de raccordement (48a ; 50a), avec une poche de littérature (44a) comportant une aperture (46a), par laquelle la littérature et des autres objets soient introduisibles dans la poche de littérature (44a), et avec au moins une unité de fixation (14a ; 14b) configurée pour fixer, en au moins un état opératif, au moins un PDA (16a ; 16b) au dossier (10a ; 10b) de manière échangeable et opérable,
l'unité de fixation (14a ; 14b) étant intégrée au moins partiellement dans l'unité de support de siège d'avion (12a ; 12b) réalisée comme pont de dossier,
**caractérisé en ce qu'**un espace tendu entre la partie médiane (52a) de l'unité de support de siège d'avion (12a) et un côté arrière (40a) du dossier (10a) forme l'aperture (46a) de la poche de littérature (44a).

2. Siège d'avion selon la revendication 1,
**caractérisé en ce que** l'unité de fixation (14a ; 14b) comporte au moins un élément mouvable de rétention (18a ; 18b), qui est raccordé à l'unité de support de siège d'avion (12a ; 12b).

3. Siège d'avion selon la revendication 2,
**caractérisé en ce que** l'élément mouvable de rétention (18a ; 18b) est réalisée comme clapet pivotable.

4. Siège d'avion selon l'une quelconque des revendications 2 ou 3,
**caractérisé en ce que** l'élément mouvable de rétention (18a ; 18b) comporte au moins un élément d'appui (20a ; 20b) configuré pour appuyer une extrémité inférieure du PDA (16a ; 16b).

5. Siège d'avion au moins selon la revendication 2,
**caractérisé en ce que** l'élément mouvable de rétention (18a) forme un contour extérieur (22a) s'étendant, en état replié, planairement avec un contour extérieur (24a) de l'unité de support de siège d'avion (12a).

6. Siège d'avion au moins selon la revendication 2,
**caractérisé en ce que** l'unité de support de siège d'avion (12a) forme une poche (26a), dans laquelle l'élément mouvable de rétention (18a) est aménagé en état replié.

7. Siège d'avion au moins selon la revendication 2,
**caractérisé en ce que** l'élément de rétention (18a ; 18b) s'étend seulement à travers d'une partie de l'unité de support de siège d'avion (12a ; 12b) réalisée comme pont de dossier.

8. Siège d'avion selon l'une quelconque des revendications précédentes,
**caractérisé par** au moins une unité d'accommodation (28a ; 28b) pour une fixation d'une extrémité supérieure du PDA (16a ; 16b).

9. Siège d'avion selon la revendication 8,
**caractérisé en ce que,** pour une fixation de l'extrémité supérieure du PDA (16a ; 16b), l'unité d'accommodation (28a ; 28b) est disposée dans une zone (30a ; 30b) au-dessus de l'unité de support de siège d'avion (12a ; 12b) réalisée comme pont de dossier.

10. Siège d'avion selon la revendication 8 ou 9,
**caractérisé en ce que** l'unité d'accommodation (28a ; 28b) est réalisée comme patte pivotable.

11. Siège d'avion au moins selon la revendication 8,
**caractérisé en ce que** l'unité d'accommodation (28b) comporte au moins un élément d'appui (82b), qui est configuré pour appuyer des PDA (16b) ayant des dimensions différentes sur l'unité d'accommodation (28b).

12. Siège d'avion au moins selon la revendication 2,
**caractérisé en ce que** l'élément mouvable de rétention (18a) comporte au moins un enfoncement (32a) s'étendant d'une extrémité raccordée (34a).

13. Siège d'avion au moins selon la revendication 2,
**caractérisé par** au moins une unité de verrouillage (36a), laquelle fixe l'élément mouvable de rétention (18a) en état replié.

14. Siège d'avion au moins selon la revendication 2,
**caractérisé par** au moins un élément de ressort exerçant, en au moins un état opératif, une force de fermeture sur l'élément de rétention (18a).

15. Siège d'avion au moins selon la revendication 8,
**caractérisé par** au moins un élément de ressort exerçant, en au moins un état opératif, une force de fermeture sur l'unité d'accommodation (28b).
